## Europäisches Patentamt
## European Patent Office
## Office européen des brevets

(19)

(11) Numéro de publication : **0 043 301 B1**

(12) # FASCICULE DE BREVET EUROPÉEN

(45) Date de publication du fascicule du brevet :
**05.09.84**

(51) Int. Cl.³ : **C 01 G 15/00**

(21) Numéro de dépôt : **81400933.8**

(22) Date de dépôt : **12.06.81**

(54) **Procédé de fabrication d'oxyde de gallium.**

(30) Priorité : **27.06.80 FR 8014308**

(43) Date de publication de la demande :
**06.01.82 Bulletin 82/01**

(45) Mention de la délivrance du brevet :
**05.09.84 Bulletin 84/36**

(84) Etats contractants désignés :
**AT BE CH DE FR GB IT LI LU NL SE**

(56) Documents cités :
**PAUL PASCAL: "Nouveau Traité de Chimie Miné-rale", vol. VI, 1961, blz. 746-747 MASSON et Cie Paris, FR
CHEMICAL ABSTRACTS, vol. 76, no. 16, 17 avril 1972, page 139 abrégé 87914s Columbus, Ohio, US B. TOTH et al.: "Preparation of high purity trivalent gallium oxide"
Le dossier contient des informations techniques présentées postérieurement au dépôt de la demande et ne figurant pas dans le présent fascicule.**

(73) Titulaire : **RHONE-POULENC SPECIALITES CHIMI-QUES
"Les Miroirs" 18, Avenue d'Alsace
F-92400 Courbevoie (FR)**

(72) Inventeur : **Boudot, Bernard
146, boulevard Diderot
F-75012 - Paris (FR)**
Inventeur : **Grosbois, Jean
357 Parc de Cassan
F-95290 L'Isle-Adam (FR)**
Inventeur : **Pajot, Michel
7, avenue du Parc
F-30340- Salindres (FR)**

(74) Mandataire : **Savina, Jacques et al
RHONE-POULENC RECHERCHES Service Brevets
Chimie et Polymères 25, Quai Paul Doumer
F-92408 Courbevoie Cedex (FR)**

**Description**

La présente invention a pour objet un procédé de fabrication d'oxyde de gallium.

On connaît les procédés de fabrication d'oxyde de gallium par précipitation puis déshydratation de l'hydroxyde. Plus précisément il est connu de précipiter l'hydroxyde avec une base telle que NaOH ou NH₄OH à partir de solutions de sulfate, nitrate ou chlorure de gallium.

Un tel procédé présente de nombreux inconvénients. Il conduit à un précipité dont la filtration et le lavage peuvent s'avérer très difficile. Par ailleurs, la morphologie du produit obtenu peut s'avérer défavorable, notamment pour la fabrication de grenats à base de gallium par réaction solide-solide. Par exemple, un oxyde de gallium préparé par ce procédé peut présenter une phase aciculaire importante au côté d'une phase agglomérée.

Il est par ailleurs connu d'après le « Nouveau Traité de Chimie Minérale » Paul Pascal, Vol. VI, 1961 pages 746-747, de préparer un précipité d'hydroxyde de gallium gélatineux par mélange d'une solution de sel de gallium avec une base, puis, par mûrissement, de faire un oxyhydroxyde, ce dernier pouvant être ensuite séché et calciné pour obtenir l'oxyde de gallium.

Toutefois, les auteurs font clairement ressortir qu'il est très difficile d'obtenir un oxyhydroxyde de formule bien définie, bien cristallisé, donc bien filtrable.

La demanderesse a mis au point un procédé de fabrication d'oxyde de gallium qui permet d'obtenir une excellente filtration du précipité et qui conduit à un produit homogène constitué de cristaux d'oxyde de gallium bien individualisés se présentant sous formes de petites aiguilles et dont la réactivité notamment dans les réactions solide-solide pour fabriquer les grenats à base de gallium est excellente. Ce procédé comporte notamment une étape de précipitation dans des conditions de pH bien définies et une étape de mûrissement à chaud qui conduit à la fabrication d'oxyhydroxyde de gallium que l'on sèche puis que l'on calcine pour obtenir l'oxyde de gallium.

La présente invention concerne en effet un procédé de fabrication d'oxyde de gallium qui consiste :

a) à mélanger sous agitation une solution de sel de gallium avec une base pour obtenir l'hydroxyde de gallium

b) à opérer le mûrissement de l'hydroxyde de gallium obtenu

c) à filtrer le précipité d'oxyhydroxyde obtenu

d) à le sécher

e) à le calciner

à effectuer un lavage intermédiaire avant et/ou après filtration,
et qui est caractérisé en ce que durant toute la durée du mélange opérant la précipitation de l'hydroxyde de gallium, le pH du milieu réactionnel est compris entre 6 et 8,5 et en ce que le mûrissement est opéré à une température comprise entre 60 et 100 °C et en ce que le pH du milieu au cours du mûrissement est maintenu à une valeur comprise entre 6 et 7.

Le procédé de fabrication d'oxyde de gallium selon l'invention comporte une étape a) selon laquelle on mélange sous agitation une solution de sel de gallium avec une base pour obtenir l'hydroxyde de gallium.

La solution de sel de gallium que l'on peut mettre en œuvre est toute solution susceptible de former l'hydroxyde de gallium par mise en contact avec une base. La concentration en gallium de la solution de sel de gallium peut varier dans de larges limites, par exemple de 1 à 150 g/l ; elle peut être avantageusement comprise entre 40 et 100 g/l. On préfère utiliser une solution de chlorure ou une solution de nitrate de gallium.

La base mise en œuvre peut notamment être choisie parmi : l'ammoniaque, l'ammoniac, la soude, l'urée, l'hexaméthylène tétramine, le carbamate d'ammonium... On préfère mettre en œuvre l'ammoniaque.

Pendant toute la durée du mélange opérant la précipitation de l'hydroxyde de gallium, le pH du milieu réactionnel est maintenu entre 6 et 8,5 et de préférence entre 6,4 et 6,8. Dans ces intervalles, il peut être avantageux de maintenir le pH à valeur constante à ± 0,1 unité de pH.

Selon une mise en œuvre préférée du procédé de l'invention le mélange est effectué à chaud, c'est-à-dire à une température comprise entre 60 et 100 °C et de préférence entre 95 et 100 °C. On opère avantageusement à l'ébullition sous reflux.

Selon l'étape b) du procédé de l'invention on opère le mûrissement de l'hydroxyde de gallium Ga(OH)₃ de façon à le transformer en oxyhydroxyde de gallium GaO(OH).

Le mûrissement est opéré à chaud, c'est-à-dire à une température comprise entre 60 et 100 °C et de préférence entre 95 °C et 100 °C.

Au cours du mûrissement le pH du milieu est maintenu entre 6 et 7 et de préférence entre 6,5 et 7. Il est plus particulièrement régulé à une valeur constante dans cet intervalle à ± 0,2 unité de pH.

Le temps de mûrissement dépend notamment des conditions dans lesquelles on a effectué la précipitation de l'hydroxyde de gallium, il est généralement compris entre environ 1 heure et 10 heures.

D'une façon générale, dans une mise en œuvre discontinue, il s'avère qu'à quantités précipitées égales, une précipitation de longue durée conduit à un temps de mûrissement important afin d'homogénéiser la morphologie du précipité, alors qu'une précipitation de courte durée conduit à un temps de mûrissement court pour les mêmes raisons.

Selon l'étape c) du procédé de l'invention, on opère la filtration de l'oxyhydroxyde obtenu sous pression ou sous vide.

L'élément filtrant mis en œuvre doit présenter, de préférence, une porosité très faible de l'ordre de 1 à 5 µm. Ainsi qu'il est bien connu de l'homme de l'art, la filtration de l'oxyhydroxyde peut être mise en œuvre en ajoutant au précipité, avant ou après le mûrissement, un agent floculant décomposable à basse température.

Le lavage de l'oxyhydroxyde est effectué selon le procédé de l'invention avant et/ou après l'opération de filtration. Le lavage est, de préférence, opéré avec de l'eau jusqu'à l'obtention d'eaux de lavage présentant un pH voisin de la neutralité. Ce lavage a essentiellement pour but d'éliminer les sels formés lors de la précititation, il peut notamment s'effectuer soit par transfert à travers le gâteau d'oxyhydroxyde d'un certain volume d'eau, soit par remise en suspension du gâteau de filtration.

Le procédé de l'invention permet ainsi, par rapport aux procédés de l'art antérieur, d'opérer les opérations de filtration-lavage avec une très grande facilité et beaucoup plus rapidement.

Selon l'étape d) du procédé de l'invention, on sèche ensuite l'oxyhydroxyde à l'air ou sous vide à des températures comprises entre environ 100 °C et 200 °C pendant environ 5 à 15 heures. Ce séchage est, de préférence, opéré à l'étuve à une température comprise entre 110 et 150 °C pendant un temps compris entre 10 et 12 heures.

Selon l'étape e) du procédé de l'invention, on calcine le produit séché à une température comprise entre 800 et 1 400 °C selon la nature du sel de départ. Ainsi lorsque l'on part de chlorure de gallium, une calcination à une température voisine de 1 200 °C s'avère avantageuse pour éliminer la totalité des chlorures restant après lavage. Le temps de calcination pour obtenir l'oxyde de gallium $Ga_2O_3$ est de préférence compris entre environ 1 et 10 heures et plus particulièrement entre 2 et 4 heures.

L'oxyde de gallium obtenu présente généralement une surface spécifique comprise entre environ 0,5 et 12 m²/g et une densité voisine de 6,0 environ.

Le microscope électronique à balayage révèle l'existence de cristaux élémentaires sous forme d'aiguilles dont la longueur est généralement comprise entre environ 2 et 30 µm et la largeur entre 1 et 3 µm.

Ces cristaux sont bien individualisés et caractéristiques d'un produit homogène, réagissant très bien dans les réactions solide-solide. Ainsi, le tirage de Czochralski sur le mélange des oxydes de gallium et de gadolinium non préréagi a donné des cristaux sans défaut.

Par ailleurs, l'oxyde de gallium obtenu selon le procédé de la présente invention peut être utilisé notamment en électronique pour la fabrication de grenats, luminophores, etc...

Exemple 1

Dans un réacteur agité de 3 000 litres, on mélange sous agitation une solution de 537 litres de chlorure de gallium dont la concentration est de 61,4 g/l en gallium avec une solution d'ammoniaque dont la concentration est de 6,6 moles/l à pH régulé à la valeur 6,7 ± 0,1.

Pendant toute la durée de la précipitation, la température est maintenue à 95 °C.

On opère ensuite le mûrissement du précipité à 95 °C pendant 2 heures. Au cours du mûrissement le pH est maintenu à la valeur de 6,7.

On opère le lavage de l'oxyhydroxyde obtenu par trois opérations de décantation avec un volume d'eau égal au volume des eaux-mères.

On filtre ensuite sur filtre Nutche l'oxyhydroxyde. La vitesse de filtration est de l'ordre de 3 m³/h/m².

On sèche à l'étuve à 130 °C pendant 15 heures le gâteau de filtration, puis on le calcine à 1 200 °C pendant 3 heures.

L'oxyde de gallium obtenu présente une surface spécifique de 4 m²/g et une densité de 6,0.

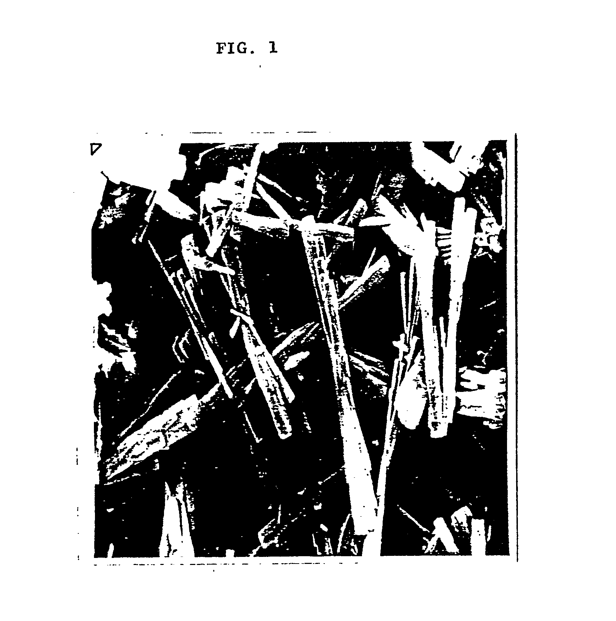

La photographie du produit obtenu par la microscopie électronique à balayage est donnée à la figure 1.

Exemple 2

Dans un réacteur agité de 500 litres, on mélange sous agitation une solution de 68 litres de nitrate de gallium dont la concentration est de 112 g/l en gallium avec une solution d'ammoniaque dont la concentration est de 6 N à un pH régulé à la valeur de 6,55 ± 0,1.

Pendant toute la durée de la précipitation la température est maintenue à 100 °C. La précipitation a duré 4 heures.

On opère ensuite le mûrissement du précipité à 98 °C pendant 4 heures. Au cours du mûrissement le pH est maintenu à la valeur de 6,60.

On opère la filtration sur filtre Nutche de l'oxyhydroxyde obtenu. La vitesse de filtration est de l'ordre de 2,5 m³/h/m².

On effectue ensuite le lavage de l'oxyhydroxyde par passage de 200 litres d'eau à travers le gâteau de filtration.

On sèche à l'étude à 120 °C pendant 15 heures le gâteau de filtration, puis on le calcine à 1 250 °C pendant 10 heures.

L'oxyde de gallium obtenu présente une surface spécifique de 2 m²/g et une densité de 6,0.

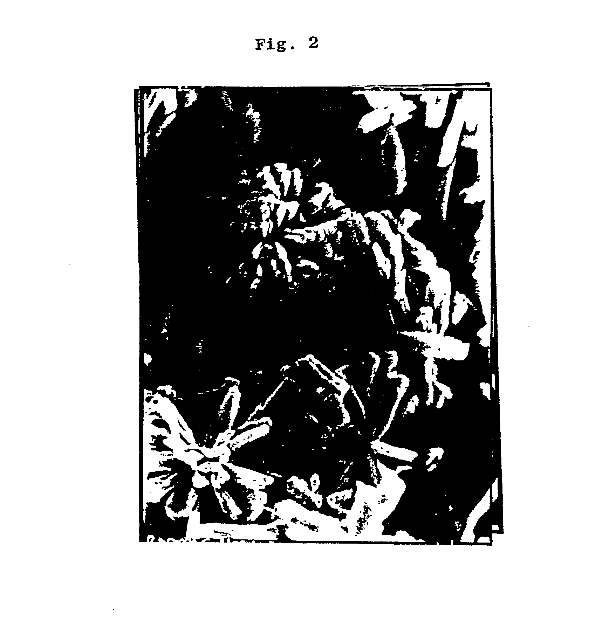

La photographie du produit obtenu par la microscopie électronique à balayage est donnée à la figure 2.

**Revendications**

1. Procédé de fabrication d'oxyde de gallium qui consiste :

a) à mélanger sous agitation une solution de sel de gallium avec une base pour obtenir l'hydroxyde de gallium

b) à opérer le mûrissement de l'hydroxyde de gallium obtenu

c) à filtrer le précipité d'oxyhydroxyde obtenu

d) à le sécher

e) à le calciner

à effectuer un lavage intermédiaire avant et/ou après filtration,

et qui est caractérisé en ce que durant toute la durée du mélange opérant la précipitation de l'hydroxyde de gallium, le pH du milieu réactionnel est compris entre 6 et 8,5 et en ce que le mûrissement est opéré à une température comprise entre 60 et 100 °C et en ce que le pH du milieu au cours du mûrissement est maintenu à une valeur comprise entre 6 et 7.

2. Procédé selon la revendication 1 caractérisé en ce que la solution de sel de gallium est choisie parmi le groupe comportant les solutions de chlorure et de nitrate de gallium.

3. Procédé selon la revendication 1 ou 2 caractérisé en ce que la concentration de la solution de sel de gallium est comprise entre 1 et 150 g/l.

4. Procédé selon la revendication 1 caractérisé en ce que la base est choisie parmi le groupe comportant : l'ammoniaque, l'ammoniac, la soude, l'urée, l'hexaméthylène tétramine, le carbamate d'ammonium.

5. Procédé selon la revendication 1 caractérisé en ce que, pendant toute la durée du mélange opérant la précipitation de l'hydroxyde de gallium, le pH du milieu réactionnel est compris entre 6,4 et 6,8.

6. Procédé selon la revendication 1 ou 5 caractérisé en ce que le pH du milieu réactionnel est maintenu à une valeur constante à ± 0,1 unité de pH.

7. Procédé selon la revendication 1 caractérisé en ce que le mélange est opéré à chaud, à une température comprise entre 60 et 100 °C.

8. Procédé selon la revendication 7 caractérisé en ce que le mélange est opéré à chaud à une température comprise entre 95 et 100 °C.

9. Procédé selon la revendication 1 caractérisé en ce que le mûrissement est opéré à une température comprise entre 95 et 100 °C.

10. Procédé selon la revendication 1 caractérisé en ce que le pH du milieu au cours du mûrissement est maintenu à une valeur comprise entre 6,5 et 7.

11. Procédé selon la revendication 1 ou 10 caractérisé en ce que le pH du milieu au cours du mûrissement est maintenu à une valeur constante à ± 0,2 unité de pH.

**Claims**

1. A process for the manufacture of gallium oxide which consists in :

a) mixing a solution of a gallium salt with a base, with stirring, to obtain gallium hydroxide

b) ageing the gallium hydroxide obtained

c) filtering off the precipitate of oxyhydroxide obtained

d) drying it

e) calcining it

carrying out an intermediate washing before and/or after filtration,

and which is characterised in that throughout the period of mixing producing the precipitation of gallium hydroxide, the pH of the reaction medium is between 6 and 8.5 an in that the ageing is carried out at a temperature between 60 and 100 °C and in that the pH of the medium during the ageing is held at a value between 6 and 7.

2. A process according to Claim 1, characterised in that the solution of gallium salt is chosen from the group consisting of the solutions of gallium chloride and gallium nitrate.

3. A process according to Claim 1 or 2, characterised in that the concentration of the solution of gallium salt is between 1 and 150 g/litre.

4. A process according to Claim 1, characterised in that the base is chosen from the group consisting of ammonia, aqueous ammonia, sodium hydroxide, urea, hexamethylenetetramine and ammonium carbamate.

5. A process according to Claim 1, characterised in that, throughout the duration of the mixing producing the precipitation of gallium hydroxide, the pH of the reaction medium is between 6.4 and 6.8.

6. A process according to Claim 1 or 5, characterised in that the pH of the reaction medium is held at a value which is constant to within ± 0.1 of a pH unit.

7. A process according to Claim 1, characterised in that the mixing is carried out hot, at a temperature between 60 and 100 °C.

8. A process according to Claim 7, characterised in that the mixing is carried out hot at a temperature between 95 and 100 °C.

9. A process according to Claim 1, characterised in that the ageing is carried out at a temperature between 95 and 100 °C.

10. A process according to Claim 1, characterised in that the pH of the medium during the ageing is held at a value between 6.5 and 7.

11. A process according to Claim 1 or 10, characterised in that, during the ageing, the pH of the medium is held at a value which is constant to within ± 0.2 of a pH unit.

**Ansprüche**

1. Verfahren zur Herstellung von Galliumoxid, bei dem

a) zur Gewinnung von Galliumhydroxid eine Lösung aus Galliumsalz unter Rühren mit einer Base gemischt wird,

b) der Reifeprozeß des erhaltenen Galliumhydroxids vorgenommen wird,

c) der erhaltene Oxyhydroxid-Niederschlag abfiltriert,

d) getrocknet,

e) kalziniert wird und

vor und/oder nach dem Filtrieren eine Zwischenwäsche vorgenommen wird,

dadurch gekennzeichnet, daß während der gesamten Dauer des Mischens zur Ausfällung des Galliumhydroxids der pH-Wert des Reaktionsgemisches bei 6 bis 8,5 liegt, daß der Reifeprozeß bei einer Temperatur von 60 bis 100 °C erfolgt, und daß der pH-Wert des Gemisches während des Reifeprozesses auf einem Wert zwischen 6 und 7 gehalten wird.

2. Verfahren nach Anspruch 1, dadurch gekennzeichnet, daß die Galliumsalzlösung unter der Gruppe gewählt wird, die die Lösungen aus Galliumchlorid und -nitrat enthält.

3. Verfahren nach Anspruch 1 oder 2, dadurch gekennzeichnet, daß die Konzentration der Galliumsalzlösung zwischen 1 und 150 g/l beträgt.

4. Verfahren nach Anspruch 1, dadurch gekennzeichnet, daß die Base aus der Gruppe gewählt wird, die Salmiakgeist, Ammoniak, Natronlauge, Harnstoff, Hexamethylentetramin und Ammoniumcarbamat enthält.

5. Verfahren nach Anspruch 1, dadurch gekennzeichnet, daß während der gesamten Dauer des Mischens zur Ausfällung des Galliumhydroxides der pH-Wert des Reaktionsgemisches zwischen 6,4 und 6,8 liegt.

6. Verfahren nach Anspruch 1 oder 5, dadurch gekennzeichnet, daß der pH-Wert des Reaktionsgemisches auf einem um ± 0,1 pH-Einheiten konstanten Wert gehalten wird.

7. Verfahren nach Anspruch 1, dadurch gekennzeichnet, daß das Mischen in der Wärme bei einer Temperatur von 60 bis 100 °C erfolgt.

8. Verfahren nach Anspruch 7, dadurch gekennzeichnet, daß das Mischen in der Wärme bei einer Temperatur von 95 bis 100 °C erfolgt.

9. Verfahren nach Anspruch 1, dadurch gekennzeichnet, daß der Reifeprozeß bei einer Temperatur von 95 bis 100 °C vorgenommen wird.

10. Verfahren nach Anspruch 1, dadurch gekennzeichnet, daß der pH-Wert des Gemisches während des Reifeprozesses zwischen 6,5 und 7 gehalten wird.

11. Verfahren nach Anspruch 1 oder 10, dadurch gekennzeichnet, daß der pH-Wert des Gemisches während des Reifeprozesses auf einem um ± 0,2 pH-Einheiten konstanten Wert gehalten wird.

FIG. 1

Fig. 2